# EUROPÄISCHE PATENTSCHRIFT

(11) **EP 0 980 643 B1**
(45) Veröffentlichungstag und Bekanntmachung des Hinweises auf die Patenterteilung: **12.05.2004**
(21) Anmeldenummer: 99115786.8
(22) Anmeldetag: 11.08.1999
(51) Int. Cl.: A01C 5/06, A01C 7/20

(54) **Aufhängung eines Reihenräumers und mit diesem ausgestattete Sämaschine**
Suspension for a line reamer and seeder equipped with it
Suspension pour alésoir en ligne et sémoir ainsi équipé

(30) Priorität: 17.08.1998 DE 19837272
(43) Veröffentlichungstag der Anmeldung: 23.02.2000
(73) Patentinhaber: DEERE & COMPANY, Moline, Illinois 61265-8098 (US)
(72) Erfinder: Jüptner, Detlef, 66901 Schönenberg-Kübelberg (DE)
(74) Vertreter: Lau-Loskill, Philipp, Dipl.-Phys.

(56) Entgegenhaltungen:
- FR-A- 2 499 817
- GB-A- 1 144 056

## Beschreibung

Die Erfindung betrifft eine Sämaschine, umfassend eine Säeinheit mit einem Furchenöffner, der vertikal schwenkbar an einem Träger angebracht ist, welcher wiederum vertikal schwenkbar an einem Rahmen angebracht ist, und mit einem vertikal schwenkbaren Reihenräumer, der an einer Aufhängung befestigt ist.

Aus der US A 5 341 754 A ist ein Sägerät bekannt, das an einem Querträger mehrere seitlich einen Abstand zueinander aufweisende Säeinheiten aufweist. Jede Säeinheit besitzt einen Furchenöffner, der vertikal schwenkbar an dem Querträger angebracht ist und eine Furche zur Ablage von Saatgut bildet. Dem Furchenöffner ist ein Reihenräumer vorgeschaltet, der über ein Parallelogrammgestänge ebenfalls vertikal schwenkbar an dem Querträger angreift. Mittels einer Feder wird der Reihenräumer auf den Boden gedrückt.

Es wurde daneben in der nachveröffentlichten europäischen Patentanmeldung EP 0 894 426 A bereits vorgeschlagen, den Reihenräumer an dem Furchenöffner anzubringen, so daß letzterer den Reihenräumer mit sich in der Höhe verstellt.

Das der Erfindung zugrunde liegende Problem wird darin gesehen, daß beim Anheben der Furchenöffner die Reihenräumer nicht im gleichen Maß angehoben werden, was insbesondere bei Straßenfahrten nachteilig ist, bzw. daß die Reihenräumer bei abgesenkter Stellung der Furchenöffner stets in den Boden eindringen. Schließlich soll eine Sämaschine geschaffen werden, die mit geringem Aufwand die Reihenräumer verstellen kann.

Dieses Problem wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Auf diese Weise wird beim Anheben des Furchenöffners der Reihenräumer wenigstens soweit angehoben, daß er nicht unterhalb des Furchenöffners endet, und somit wird die Gefahr vermieden, daß er beim Transport auf dem Boden aufschlägt. Je nachdem wo sich die Anlenkstelle des Reihenräumers für seine vertikale Schwenkbewegung befindet, kann eine größere oder eine kleinere Übersetzung erforderlich sein, um den Reihenräumer genügend weit anzuheben. Insbesondere dann, wenn der Reihenräumer mittels einer Feder auf den Boden gedrückt wird, wird mittels der Aushubvorrichtung sichergestellt, daß die Wirkung der Feder und der vertikale Bewegungsspielraum des Reihenräumers ausgeschaltet werden. Unter Gestänge wird jegliche Art einer mechanischen Verbindung, d. h. Strebe, Seil, Kette und dergleichen verstanden. Unter einem Gestänge könnte aber auch eine Flüssigkeitssäule in einem hydraulischen Kreis oder ein elektrisches System verstanden werden. Die Übersetzung kann mittels einfacher Hebel oder Anlenkpunktdimensionierung gewonnen werden. Denkbar ist jedoch auch eine Zahnradübersetzung oder ein Ratschenmechanismus. Der Angriff der Gestänge und des Aus- bzw. Eingangsglieds kann unmittelbar wie mittelbar an dem Reihenräumer, dem Furchenöffner oder vorzugsweise an dem Träger erfolgen. Der Angriff an dem Träger kann direkt oder über eine Anschlußkonsole für den Furchenöffner erfolgen. Die Aushubvorrichtung kann vielfältig, z. B. schwenkbar oder vertikal verschiebbar ausgebildet sein.

Eine unkomplizierte, kostengünstige und dem rauhen Betrieb in der Landwirtschaft gewachsene Konstruktion einer Aushubvorrichtung mit Übersetzungsmöglichkeit wird durch eine Welle mit zwei evtl. unterschiedlich geformten Ein- bzw. Ausgangsgliedern geschaffen, die starr miteinander verbunden sind. Die Schwenklagerung der Welle ist einfach zu realisieren. Das Einund das Ausgangsglied können sowohl in die gleiche wie auch in entgegengesetzte Richtungen weisen.

Mittels einer unterschiedlichen Bemessung der Länge der als Hebel geformten Eingangs- und Ausgangsglieder, oder durch eine unterschiedlich weite Anordnung der Gestänge an dem Ein- und Ausgangsglied können beliebige Übersetzungsverhältnisse erzeugt werden. Es können auch permanent verschiedene Anlenkstellen vorgesehen werden, so daß eine Anpassung an verschiedene Betriebsverhältnisse leicht möglich ist.

Auch die Möglichkeit, das Eingangsglied und das Ausgangsglied unterschiedlich aneinander auszurichten erlaubt es, unterschiedlichen Gewichtskräften, unterschiedlichen Gestängefestigkeiten und unterschiedlich gebauten Säeinheiten Rechnung zu tragen.

Wenn das mit dem Reihenräumer verbundene und einerseits von dem Ausgangsglied gehaltene Gestänge unter Druck in der Länge flexibel ausgebildet ist, kann sich der Reihenräumer jederzeit nach oben bewegen und einem Hindernis oder zu hartem Boden ausweichen. Bei entsprechender Bewegung des Trägers kann das zweite Gestänge so lose sein, daß es den Reihenräumer auch Vertiefungen folgen läßt.

Eine veränderbare Länge des ersten und zweiten Gestänges stellt eine Alternative oder Ergänzung zu einer Änderung der Aushubvorrichtung dar, um eine Anpassung an andere Betriebsverhältnisse zu erreichen.

Wird der Reihenräumer mittels eines Parallelogrammgestänges an einen Tragarm des Furchenöffners angeschlossen, verändert er seine Neigung gegenüber dem Boden nicht und bringt stets die gleiche Eindringkraft auf. Außerdem kann dann auf optimale Weise eine Stellung gewählt werden, in der Stroh vor dem Reihenräumer zuverlässig geschnitten wird.

Die Reihenräumer werden nicht nur beim Anheben der Säeinheiten, sondern auch dauerhaft in einer angehobenen Stellung gehalten, wenn ein sie tragendes Gestänge, und zwar insbesondere ein Parallelogrammgestänge, arretierbar ist und somit ein Absenken des Reihenräumers verhindert. Anstatt eines Parallelogrammgestänges kann auch ein einzelner Lenker verwendet werden, dessen Bewegung gesperrt wird.

Indem wenigstens ein Lenker des Gestänges über eine Arretiervorrichtung verriegelbar ist, z. B. an dem Reihenräumertragarm, kann der Reihenräumer während des Betriebs der Säeinheit in einer oberen Stellung gehalten werden, in der er außer Betrieb bleibt. Dies ist insbesondere wichtig unter Umständen beim Transport, wenn gar keine Furche zu räumen ist, oder beim Einsatz in der Mulchsaat. Auf diese Weise kann die auf das Sägerät aufzubringende Zugkraft minimiert bzw. auf eine Demontage der Reihenräumer verzichtet werden und es wird eine Rillenbildung in einem vorbereiteten Saatbett vermieden. Die Arretiervorrichtung kann ein Riegel, ein Haken, eine Kette, eine Sperre und dergleichen mehr sein, die geschlossen oder halb offen ein anderes Bauelement übergreifen.

Ein sehr guter Bedienungskomfort wird erreicht, wenn die Arretiervorrichtung fernbetätigbar ist, weil es dann einer Bedienungsperson erspart bleibt, zur Außerbetriebsetzung der Reihenräumer von dem Zugfahrzeug abzusteigen und gegebenenfalls eine Vielzahl von Reihenräumern zu verriegeln.

Die Verwendung einer einzigen Welle mit nur einem Eingangsglied und nur einem ersten Gestänge an einer Sämaschine mit einer Vielzahl von Säeinheiten führt zu einer beträchlichen Kostenersparnis.

In der Zeichnung ist ein nachfolgend näher beschriebenes Ausführungsbeispiel der Erfindung dargestellt. Es zeigt:

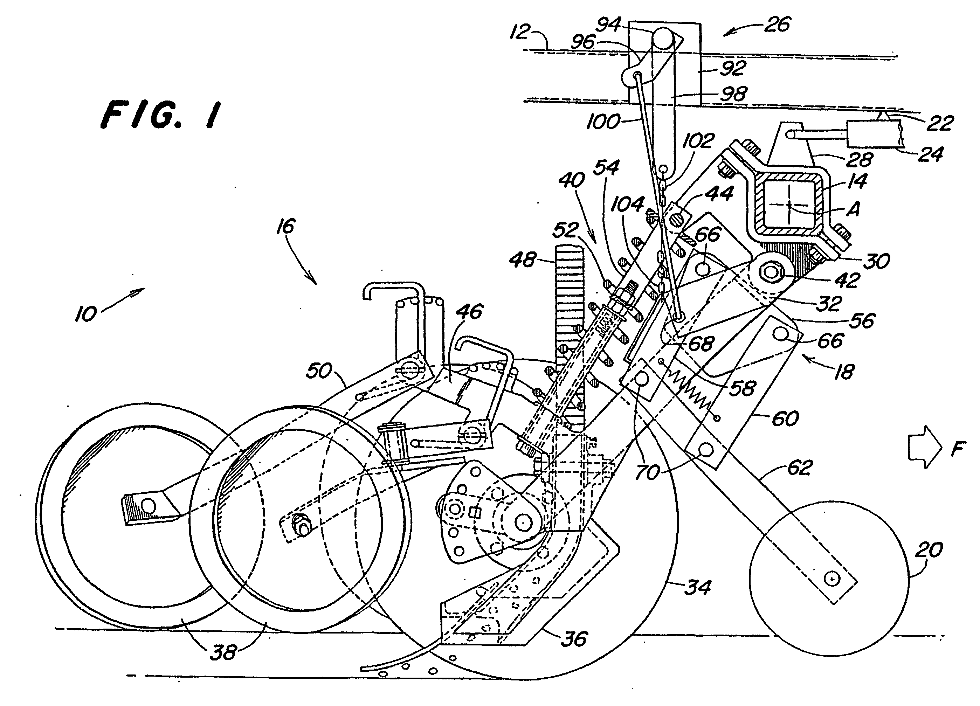

- Figur 1: einen Ausschnitt einer Sämaschine mit einer erfindungsgemäßen Aufhängung in Seitenansicht,
- Figur 2: eine Arretiervorrichtung in Seitenansicht,
- Figur 3: die Arretiervorrichtung aus Figur 2 in Draufsicht,
- Figur 4: eine stilistische Darstellung der Aufhängung in einer Betriebsstellung und

- Figur 5: eine stilistische Darstellung der Aufhängung in einer Transportstellung.

Eine Sämaschine 10 wird zum Ausbringen von Saatgut benutzt und kann sowohl auf vorbereitetem Boden wie auch zur Direkt- und Mulchsaat benutzt werden.

Unter anderem enthält die Sämaschine einen Rahmen 12, einen Träger 14, wenigstens eine Säeinheit 16 und wenigstens eine erfindungsgemäße Aufhängung 18 eines Reihenräumers 20. Die weitere Beschreibung geht der Einfachheit halber davon aus, daß nur eine einzige Säeinheit mit folglich einer Aufhängung 18 und einem Reihenräumer 20 aus. Üblicherweise sind davon jedoch mehrere, z. B. 6, 8, 10 oder 12 vorhanden.

Der Rahmen 12 ist nur ausschnittsweise dargestellt, stützt sich üblicherweise über nicht gezeigte Räder auf dem Boden ab und wird mittels einer ebenfalls nicht gezeigten Deichsel oder Anhängevorrichtung von einem wiederum nicht gezeigten Zugfahrzeug, insbesondere einem Ackerschlepper, über ein Feld bewegt. Auf dem Rahmen 12 befindet sich wenigstens ein nicht gezeigter Saatguttank. An dem Rahmen 12 und in unmittelbarer Nähe des Trägers 16 ist ein Lager 22 für einen Stellmotor 24 vorgesehen. Ferner befindet sich an dem Rahmen 12 eine der Aufhängung 18 zugehörige Aushubvorrichtung 26.

Der Träger 14 ist als ein Vierkantrohr ausgebildet und in nicht gezeigten Lagern an der Unterseite des Rahmens 12 vertikal schwenkbar um eine Schwenkachse A angebracht. Der Träger 14 ist an wenigstens einer Stelle starr mit einem Arm 28 verbunden. Der Träger 14 erstreckt sich herkömmlicherweise über die Breite des Rahmens 12 und kann eine Vielzahl gleicher Säeinheiten 16 drehfest aufnehmen.

Die Säeinheit 16 enthält eine Anschlußkonsole 30, einen Tragarm 32, einen Furchenöffner 34, ein Säschar 36, Zustreichräder 38 und eine Druckvorrichtung 40. Die WO-A1-98/05193 offenbart eine entsprechende Säeinheit 16, und ihr Inhalt wird in diese Patentanmeldung insofern ausdrücklich mit einbezogen.

Die Anschlußkonsole 30 ist klammerartig ausgebildet und drehfest auf dem Träger 14 befestigt. Ein in der Fahrtrichtung nacheilender Bereich ist mit einem Tragarmlager 42, mit einem Druckvorrichtungslager 44 und einer Ausnehmung 68 versehen. Die Anschlußkonsole 30 ist zweiteilig ausgebildet und kann an beliebiger Stelle auf den Träger 14 aufgeklemmt werden.

Der Tragarm 32 erstreckt sich von hinten unten nach vorne oben und ist mit seinem voreilenden Endbereich in dem Tragarmlager 42 an der Anschlußkonsole 30 vertikal schwenkbar gehalten. In dem gegenüberliegenden unteren Endbereich ist der Furchenöffner 34 drehbar angeschlossen. Zwischen beiden Endbereichen zweigt eine Strebe 46 nach hinten ab.

Der Furchenöffner 34 ist als eine Scheibe ausgebildet, die mit geringer Neigung zu der Fahrtrichtung in den Boden eindringt und dabei eine Furche für die Ablage des Saatguts bildet. Je nach der Bodenbeschaffenheit oder auch beim Auftreffen auf ein Hindernis kann der Furchenöffner 34 mit dem Tragarm 32 um das Tragarmlager 42 nach oben ausweichen.

Das Säschar 36 befindet sich in dem Schattenbereich des Furchenöffners 34 und ist derart starr mit dem Tragarm 32 verbunden, daß es unterhalb der Bodenoberfläche endet. Eingangsseitig ist das Säschar 36 mit einer Leitung 48 zur Aufnahme von Saatgut aus dem Saatgutbehälter verbunden.

Die Zustreichräder 38 sind mittels eines Halters 50 vertikal schwenkbar und federbelastet an die Strebe 46 angeschlossen, als Scheiben ausgebildet und derart geneigt, daß sie bei der Fahrt über das Feld von beiden Seiten Erdbereich in die Furche schieben und diese dabei schließen.

Die Druckvorrichtung 40 enthält eine Feder 52 und konzentrisch in und zu ihr einen Wegbegrenzer 54, die jeweils einerseits an der Anschlußkonsole 30, insbesondere in dem Druckvorrichtungslager 44, und andererseits an der Strebe 46 angreifen. In herkömmlicher Weise drückt die Feder 52 den Tragarm 32 auf den Boden, so daß der Furchenöffner 34 in diesen eindringt und eine Furche bildet.

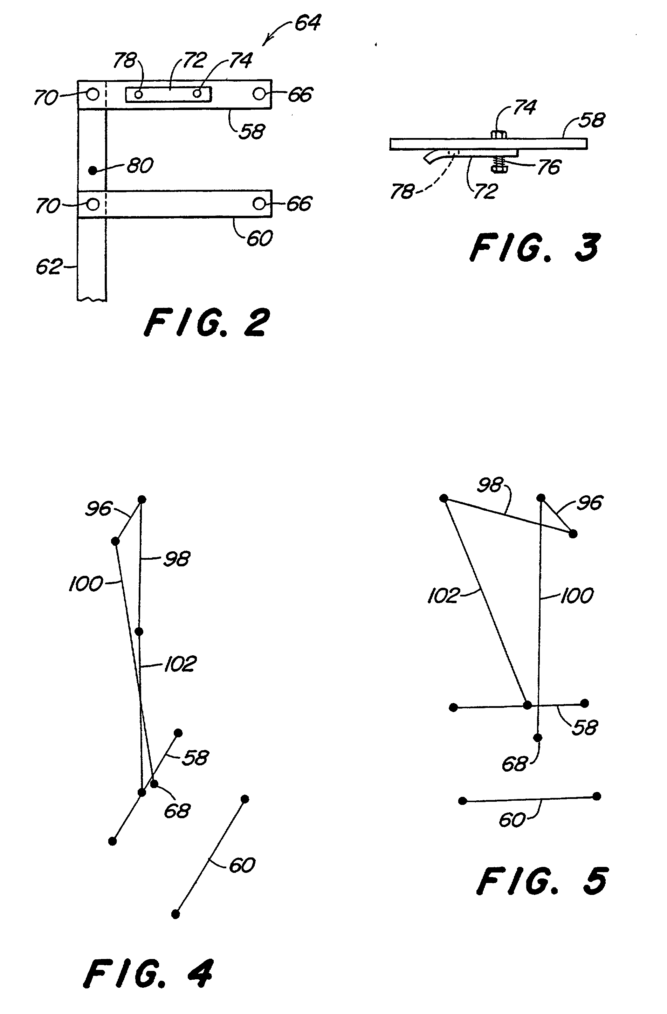

Die Aufhängung 18 enthält einen Halter 56, einen ersten und einen zweiten Lenker 58 und 60, einen Reihenräumertragarm 62, eine lediglich in den Figuren 2 und 3 gezeigte Arretiervorrichtung 64 und die Aushubvorrichtung 26.

Der Halter 56 ist als eine trapezförmige Platte ausgebildet und mittels nicht gezeigter U-Bügel an dem Tragarm 32 festgeklemmt. In den überstehenden Eckbereichen der Platte ist der Halter 56 mit Lagern 66 zur vertikal schwenkbaren Aufnahme der Lenker 58, 60 versehen.

Die Lenker 58 und 60 verlaufen wenigstens im wesentlichen zueinander parallel und besitzen im wesentlichen die gleiche Länge. Die Lenker 58, 60 sind in der Fahrtrichtung vorne in den Lagern 66 vertikal schwenkbar angelenkt und enthalten rückwärtige Lager 70, in denen sie ebenfalls vertikal schwenkbar an den Reihenräumertragarm 62 angeschlossen sind. Der Abstand und die Neigung der Mittelpunkte der Lager 66 bzw. 70 ist gleich, so daß sich ein Parallelogrammgestänge ergibt. Zwischen den Lenkern 58 und 60 erstreckt sich eine nicht näher bezeichnete und bekannte Feder zum Andrücken des Reihenräumers 20 auf den Boden.

Der Reihenräumertragarm 62 nimmt in seinem den Lenkern 58, 60 abgelegenen Endbereich den Reihenräumer 20 drehbar auf.

Eine derartige Aufhängung 18 ist bereits in der nicht vorveröffentlichten europäischen Patentanmeldung 98112929 beschrieben, deren Offenbarung ausdrücklich in diese Patentanmeldung insofern mit einbezogen wird.

Die Arretiervorrichtung 64 - sh. Figuren 2 und 3 - enthält eine einfache abgewinkelte Lasche 72, die an dem oberen Lenker 58 mittels einer Schraube 74 schwenkbar gehalten ist und mittels einer Druckfeder 76 zwischen dem Kopf der Schraube 74 und der Lasche 72 in Anlage an der Außenfläche des Lenkers 58 gehalten wird. Die Lasche 72 weist mit Abstand zu der Schraube 74 eine Ausnehmung 78 auf. Auf dem Reihenräumertragarm 62 ist ein Stift 80 vorgesehen, der in der Ausnehmung 78 aufgenommen werden kann, wenn das Parallelogramm eine Stellung einnimmt, in der sich der Lenker 58 und der Reihenräumertragarm 62 nahe kommen, bzw. das Parallelogramm zusammengeklappt ist.

Das Lager 22 und der Arm 28 sind jeweils so ausgestaltet, daß sie den Stellmotor 24 aufnehmen können. Der Stellmotor 24 wird von dem Zugfahrzeug aus hydraulisch betrieben und verschwenkt den Träger 14 mit der Anschlußkonsole 30 mit Blick auf die Zeichnung in oder entgegen dem Uhrzeigerdrehsinn, um auf diese Weise die Säeinheit 16 und den Reihenräumer 20 anzuheben oder abzusenken.

Die Aushubvorrichtung 26 enthält eine Konsole 92, eine Welle 94, ein Eingangsglied 96, ein Ausgangsglied 98, ein erstes Gestänge 100 und ein zweites Gestänge 102.

Die Aushubvorrichtung 26 dient dazu, den Reihenräumer 20 ausreichend weit von dem Boden wegzubewegen, wenn die Säeinheit 16 angehoben wird.

Die Konsole 92 ist auf dem Rahmen 12 befestigt und enthält ein nicht näher bezeichnetes Lager für die Welle 94. Die Konsole 92 befindet sich oberhalb einer Anschlußkonsole 30 und mehr oder weniger mit dieser vertikal fluchtend.

Die Welle 94 ist um eine quer zur Fahrtrichtung verlaufende horizontale Achse schwenkbar in der Konsole 92 aufgenommen.

Das Eingangsglied 96 ist als ein Hebel ausgebildet, der an die Welle 94 drehfest angeschlossen, insbesondere angeschweißt ist.

Das Ausgangsglied 98 ist ebenfalls als Hebel ausgebildet und in gleicher Weise an der Welle 94 drehfest angeschlossen.

Das Eingangsglied 96 ist zur Erreichung einer Übersetzung wesentlich kürzer als das Ausgangsglied 98 ausgebildet, um eine große Hubbewegung des Parallelogrammgestänges bzw. des Reihenräumers 20 trotz geringem Abstand zu dem Tragarmlager 42 zu erreichen. Die Längsachsen des Eingangs- und des Ausgangsglieds 96 und 98 verlaufen unter einem Winkel von ca. 45 Grad zueinander. In einer Situation, in der sich sowohl der Furchenöffner 34, wie auch der Reihenräumer 20 auf dem Boden befinden, erstreckt sich in dem bevorzugten Ausführungsbeispiel die Längsachse des Ausgangsglieds 98 von der Welle 94 aus nahezu senkrecht nach unten.

Das erste Gestänge 100 ist in der Art einer Stange ausgebildet und erstreckt sich zwischen der Ausnehmung 68 in der Anschlußkonsole 30 und dem der Welle 94 abgelegenen Endbereich des Eingangsglieds 96 und ist dort jeweils vertikal schwenkbar gelagert.

Das zweite Gestänge 102 ist flexibel, nämlich als ein Seil, ausgebildet und erstreckt sich zwischen dem der Welle 94 abgelegenen Endbereich des Ausgangsglieds 98 und einer ungefähr in der Mitte des oberen Lenkers 58 gelegenen Anschlußstelle 104.

Ist eine Sämaschine 10 mit mehreren Säeinheiten 16 versehen, wird vorteilhafterweise dennoch nur eine Welle 94, nur ein Eingangsglied 96 und nur ein erstes Gestänge 100 vorgesehen, die von einer einzigen Anschlußkonsole 30 aus beaufschlagt werden. Diese Welle 94 ersteckt sich dann über alle Säeinheiten 16 und ist mit einer entsprechenden Anzahl an Ausgangsgliedern 98 versehen, die jeweils mittels entsprechend oft vorgesehener zweiter Gestänge 102 zu dem oberen Lenker 58 des sich jeweils darunter befindlichen Parallelogramms führen. Auf diese Weise können Teile eingespart und Kosten reduziert werden. Dennoch wäre es auch möglich, für jede Säeinheit 16 eine eigene Welle 94 ein eigenes Eingangsglied 96 und ein eigenes erstes Gestänge 100 vorzusehen.

Nach alledem ergibt sich folgende Funktion der erfindungsgemäßen Aufhängung 18.

In der Betriebsstellung der Sämaschine 10 wird der Stellmotor 24 ausgefahren und der Träger 14 um die Schwenkachse A entgegen dem Uhrzeigerdrehsinn geschwenkt. In dieser Stellung dringen der Furchenöffner 34 und der Reihenräumer 20 wenigstens geringfügig in den Boden ein. Aufgrund der flexiblen Ausbildung des zweiten Gestänges 102 kann der Reihenräumer 20 beim Auftreffen auf ein Hindernis mit den Lenkern 58, 60 um die Lager 66 nach oben ausweichen. Wenn der Träger 14 ausreichend weit verschwenkt wird, d. h. selbst dann noch weiter verschwenkt wird, wenn sich der Reihenräumer 20 und der Furchenöffner 34 bereits auf dem Boden befinden, wird das zweite Gestänge 102 weiter entspannt und läßt es schließlich sogar zu, daß der Reihenräumer 20 einer Vertiefung folgt.

Um die Sämaschine 10 in einen Außerbetriebszustand zu bringen, d. h. die Säeinheiten 16 vom Boden anzuheben, wird der Stellmotor 24 eingefahren, so daß der Träger 14 um die Schwenkachse A schwenkt. Während dieser Bewegung nimmt der Wegbegrenzer 54 den Tragarm 32 nach oben mit und hebt somit den Furchenöffner 34, das Säschar 36 und die Zustreichräder 38 an. Da somit auch die Anschlußkonsole 30 eine Schwenkbewegung im Uhrzeigerdrehsinn um die Schwenkachse A vollzieht, wird das erste Gestänge 100 nach oben bewegt und schwenkt über das Eingangsglied 96 die Welle 94. Die Welle 94 bewegt das Ausgangsglied 98 und dieses nimmt das zweite Gestänge 102 mit, das aufgrund seiner räumlichen Lage zu dem Eingangsglied 96 nunmehr den oberen Lenker 58 nach oben zieht, d. h. im Uhrzeigerdrehsinn verschwenkt. Diese letzte Schwenkbewegung führt zu einem Anheben des Reihenräumers 20 und zu dessen aufwärts gerichteter Bewegung relativ zu dem Tragarm 32. Das Maß der Relativbewegung ergibt sich aus den Anlenkpunkten des ersten und des zweiten Gestänges 100, 102.

Soweit es die betrieblichen Umstände erfordern, kann in der angehobenen Stellung, in der das Parallelogramm zusammengeklappt ist, die Lasche 72 mit dem Stift 80 in Eingriff gebracht werden und somit verhindern, daß sich der Reihenräumer 20 auf den Boden absenkt, wenn die Säeinheit 16 wieder herabgelassen wird. Auf diese Weise kann der Reihenräumer 20 sowohl während des Transports wie auch beim Einsatz der Sämaschine 10 in der Mulchsaat in einer angehobenen Stellung gehalten werden. Insbesondere bei Einsatz in der Mulchsaat, d. h. wenn das Saatbett vorbereitet ist, wird somit vermieden, daß die Reihenräumer 20 ungewollt Rillen oder Gräben ziehen.

## Patentansprüche

1. Sämaschine (10), umfassend eine Säeinheit (16) mit einem Furchenöffner (34), der vertikal schwenkbar an einem Träger (14) angebracht ist, welcher wiederum vertikal schwenkbar an einem Rahmen (12) angebracht ist, und mit einem vertikal schwenkbaren Reihenräumer (20), der an einer Aufhängung (18) befestigt ist, **dadurch gekennzeichnet, dass**:
a) der Reihenräumer (20) vertikal schwenkbar an dem Furchenöffner (34) angebracht ist,
b) eine Aushubvorrichtung (26) mit einem ersten und einem zweiten Gestänge (100, 102) an dem Rahmen (12) vorgesehen ist,
c) das erste Gestänge (100) einerseits mit dem Furchenöffner (34) oder dem Träger (14) bewegbar ist und andererseits auf ein Eingangsglied (96) der Aushubvorrichtung (26) wirkt,
d) das zweite Gestänge (102) einerseits an ein Ausgangsglied (98) der Aushubvorrichtung (26) und andererseits an den Reihenräumer (20) angeschlossen ist und
e) die Aushubvorrichtung (26) zur Bewirkung einer Übersetzung der Wege des ersten und des zweiten Gestänges (100, 102) ausgebildet ist.

2. Sämaschine (10) nach Anspruch 1, **dadurch gekennzeichnet, daß** die Aushubvorrichtung (26) eine schwenkbare Welle (94) enthält, an der das Eingangsglied (96) und das Ausgangsglied (98) drehfest angeordnet sind.

3. Sämaschine (10) nach Anspruch 2, **dadurch gekennzeichnet, daß** das Eingangsglied (96) und das Ausgangsglied (98) als unterschiedlich lange Hebel ausgebildet sind, bzw. das jeweilige Gestänge (100, 102) an Stellen unterschiedlichen Abstands zu der Schwenkachse der Welle (94) aufnehmen.

4. Sämaschine (10) nach Anspruch 2 oder 3, **dadurch gekennzeichnet, daß** das Eingangsglied (96) und das Ausgangsglied (98) zueinander in unterschiedliche Stellung bringbar sind.

5. Sämaschine (10) nach einem oder mehreren der vorherigen Ansprüche, **dadurch gekennzeichnet, daß** das zweite Gestänge (102) in sich flexibel, insbesondere als Kette, Seil oder Teleskopgestänge, ausgebildet ist.

6. Sämaschine (10) nach einem oder mehreren der vorherigen Ansprüche, **dadurch gekennzeichnet, daß** die Länge des ersten und/oder des zweiten Gestänges (100, 102) veränderbar ist.

7. Sämaschine (10) nach einem oder mehreren der vorherigen Ansprüche, **dadurch gekennzeichnet, daß** der Reihenräumer (20) mittels eines Parallelogrammgestänges an einen Tragarm (32) des Furchenöffners (34) anschließbar ist.

8. Sämaschine (10) nach einem oder mehreren der vorherigen Ansprüche, **dadurch gekennzeichnet, dass** wenigstens ein Lenker (58) des Gestänges über eine Arretiervorrichtung (64) verriegelbar ist.

9. Sämaschine (10) nach Anspruch 8, **dadurch gekennzeichnet, daß** die Arretiervorrichtung (64) eine federbelastete Lasche (72) und einen Stift (80) enthält, die wahlweise miteinander in Eingriff bringbar sind.

10. Sämaschine (10) nach Anspruch 8 oder 9, **dadurch gekennzeichnet, daß** die Arretiervorrichtung (64) fernbetätigbar ist.

11. Sämaschine (10) nach einem oder mehreren der vorherigen Ansprüche, **dadurch gekennzeichnet, daß** mehreren Aufhängungen (18) eine gemeinsame Welle (94), ein gemeinsames erstes Gestänge (100) und ein gemeinsames Eingangsglied (96) zugeordnet ist, die von dem Träger (14), insbesondere mittels einer Anschlußkonsole (30) beaufschlagt werden, während jede Aufhängung (18) mittels eines eigenen Ausgangsglieds (98) und eines eigenen zweiten Gestänges (102) von der Welle (94) beaufschlagt wird.

## Claims

1. Seeding machine (10), comprising a grain drill (16) with a furrow opener (34), which is attached to a rockshaft (14) to pivot vertically, said rockshaft being itself attached to a frame (12) to pivot vertically, and with a row cleaner (20) fastened to a suspension (18) to pivot vertically, **characterised in that**:
a) the row cleaner (20) is attached to the furrow opener (34) to pivot vertically,
b) a lifting mechanism (26) is provided with a first and a second linkage (100, 102) on the frame (12),
c) the first linkage (100) is moveable, on the one hand, with the furrow opener (34) or the rockshaft (14) and, on the other hand, acts on an input crank arm (96) of the lifting mechanism (26),
d) the second linkage (102) is connected, on one side, to an output crank arm (98) of the lifting mechanism (26) and, on the other side, to the row cleaner (20), and
e) the lifting mechanism (26) is configured to perform leverage of the paths of the first and the second linkage (100, 102).

2. Seeding machine (10) according to Claim 1, **characterised in that** the lifting mechanism (26) contains a pivoting shaft (94), on which the input crank arm (96) and the output crank arm (98) are fixed against rotation.

3. Seeding machine (10) according to Claim 2, **characterised in that** the input crank arm (96) and the output crank arm (98) are configured as levers of different lengths, or receive the respective linkage (100, 102) at locations at different distances from the pivot axis of the shaft (94).

4. Seeding machine (10) according to Claim 2 or 3, **characterised in that** the input crank arm (96) and the output crank arm (98) can be brought into a different position relative to one another.

5. Seeding machine (10) according to one or more of the preceding claims, **characterised in that** the second linkage (102) is intrinsically flexible, in particular is configured as a chain, rope or telescopic linkage.

6. Seeding machine (10) according to one or more of the preceding claims, **characterised in that** the length of the first and/or the second linkage (100, 102) is variable.

7. Seeding machine (10) according to one or more of the preceding claims, **characterised in that** the row cleaner (20) can be connected to a support arm (32) of the furrow opener (34) by means of a parallelogram linkage.

8. Seeding machine (10) according to one or more of the preceding claims, **characterised in that** at least one steering arm (58) of the linkage can be locked via a locking device (64).

9. Seeding machine (10) according to Claim 8, **characterised in that** the locking device (64) contains a spring-loaded bracket (72) and a pin (80), which may be selectively brought into engagement with one another.

10. Seeding machine (10) according to Claim 8 or 9, **characterised in that** the locking device (64) may be remote-controlled.

11. Seeding machine (10) according to one or more of the preceding claims, **characterised in that** a joint shaft (94), a joint first linkage (100) and a joint input crank arm (96) are assigned to several suspensions (18), these being loaded from the rockshaft (14), in particular by means of an attachment mount (30), whereas each suspension (18) is loaded from the shaft (94) by means of its own output crank arm (98) and its own second linkage (102).

## Revendications

1. Semoir (10) comprenant une unité de semis (16) comportant un ouvreur de sillon (34), qui peut être monté de manière à pouvoir pivoter verticalement sur un support (14) qui est monté pour sa part de manière à pouvoir pivoter verticalement sur un châssis (12), et comportant un soc en ligne (20) pouvant pivoter verticalement et qui est fixé à une suspension (18), **caractérisé en ce que**:
a) le soc en ligne (20) est monté de manière à pouvoir pivoter verticalement sur l'ouvreur de sillon (34),
b) il est prévu un dispositif de soulèvement (26) comportant des première et seconde tringleries (100, 102) sur le châssis (12),
c) la première tringlerie (100) d'une part est déplaçable avec l'ouvreur de sillon (34) ou avec le support (14) et d'autre part agit sur un organe d'entrée (96) du dispositif de soulèvement (26),
d) la seconde tringlerie (102) est raccordée d'une part à un organe de sortie (98) du dispositif de soulèvement (26) et d'autre part au soc en ligne (20), et
e) le dispositif de soulèvement (26) est agencé de manière à réaliser une démultiplication des courses des première et seconde tringleries (100, 102).

2. Semoir (10) selon la revendication 1, **caractérisé en ce que** le dispositif de soulèvement (26) contient un arbre pivotant (94), vers lequel l'organe d'entrée (96) et l'organe de sortie (98) sont montés d'une manière bloquée en rotation.

3. Semoir (10) selon la revendication 2, **caractérisé en ce que** l'organe d'entrée (96) et l'organe de sortie (98) sont agencés sous la forme de leviers ayant des longueurs différentes, ou reçoivent la tringlerie respective (100, 102) en des emplacements situés à des distances différentes de l'axe de pivotement de l'arbre (94).

4. Semoir (10) selon la revendication 2 ou 3, **caractérisé en ce que** l'organe d'entrée (96) et l'organe de sortie (98) peuvent être amenés l'un par rapport à l'autre dans des positions différentes.

5. Semoir (10) selon une ou plusieurs des revendications précédentes, **caractérisé en ce que** la seconde tringlerie (102) est agencée de manière à être en soi flexible, notamment sous la forme d'une chaîne, d'un câble ou d'une tringlerie télescopique.

6. Semoir (10) selon une ou plusieurs des revendications précédentes, **caractérisé en ce que** la longueur de la première et/ou de la seconde tringlerie (100, 102) est modifiable.

7. Semoir (10) selon une ou plusieurs des revendications précédentes, **caractérisé en ce que** le soc en ligne (20) peut être raccordé au moyen d'une tringlerie en forme de parallélogramme à un bras de support (32) de l'ouvreur de sillon (34).

8. Semoir (10) selon une ou plusieurs des revendications précédentes, **caractérisé en ce qu'**au moins un levier articulé (57) de la tringlerie peut être verrouillé au moyen d'un dispositif d'arrêt (64).

9. Semoir (10) selon la revendication 8, **caractérisé en ce que** le dispositif d'arrêt (64) contient une patte (72) chargée par un ressort et une tige (80) qui peuvent être amenés au choix réciproquement à engrener entre elles.

10. Semoir (10) selon la revendication 8 ou 9, **caractérisé en ce que** le dispositif d'arrêt (64) est télécommandable.

11. Semoir (10) selon une ou plusieurs des revendications précédentes, **caractérisé en ce qu'**à plusieurs suspensions (18) sont associés un arbre commun (94), une première tringlerie commune (100) et un organe d'entrée commun (96), et sont chargés par le support (14), notamment au moyen d'une console de raccordement (30), tandis que chaque suspension (18) est chargée par l'arbre (94) au moyen d'un organe de sortie particulier (98) et d'une seconde tringlerie particulière (102).
